# EUROPEAN PATENT APPLICATION

(11) **EP 3 461 157 A1**
(43) Date of publication of application: **27.03.2019**
(21) Application number: 16903400.6
(22) Date of filing: 30.05.2016
(51) Int. Cl.: H04W 8/02

(54) **USER INFORMATION ACQUISITION METHOD, AND IDENTIFIER CORRESPONDENCE STORAGE METHOD, APPARATUS AND DEVICE**

(71) Applicant: Huawei Technologies Co., Ltd., Longgang Shenzhen, Guangdong 518129 (CN)
(72) Inventor: JIN, Heng, Shenzhen Guangdong 518129 (CN); LU, Wei, Shenzhen Guangdong 518129 (CN); LI, He, Shenzhen Guangdong 518129 (CN)
(74) Representative: Gill Jennings & Every LLP
(86) International application number: PCT/CN2016/083885
(87) International publication number: WO 2017/206012

(57) **Abstract**

This application provides a user information obtaining method and apparatus, an identifier correspondence storage method and apparatus, and a device. The user information obtaining method includes: receiving, by MEC, a first user information obtaining request; determining, by the MEC based on a prestored identifier correspondence, a context identifier corresponding to external identifier information, where the identifier correspondence is a correspondence between the external identifier information of UE and the context identifier of the UE; sending, by the MEC, a second user information obtaining request to an evolved NodeB eNodeB, where the second user information obtaining request carries the context identifier; and receiving, by the MEC, user information sent by the eNodeB in response to the second user information obtaining request. According to the user information obtaining method and apparatus, the identifier correspondence storage method and apparatus, and the device that are provided in this application, a problem that MEC cannot obtain user information from an eNodeB based on a request of an APP can be alleviated.

## Description

### TECHNICAL FIELD

This application relates to the field of mobile communications, and in particular, to a user information obtaining method and apparatus, an identifier correspondence storage method and apparatus, and a device.

### BACKGROUND

A Mobile Edge Computing (mobile edge computing, MEC for short) platform is a logical network element deployed on an S1-U interface. The MEC can intercept data sent by user equipment (user equipment, UE for short), and process the intercepted data, so that an application (application, APP for short) deployed inside or outside the MEC may respond to a request sent by the UE or perform an operation, such as modification, detection, or forwarding, on the request.

When performing the operation on the request of the UE, the APP deployed inside or outside the MEC usually uses user information such as a connection status and reachability of the UE. Because the user information of the UE is stored, in a form of a context, in an evolved NodeB (evolved NodeB, eNodeB for short) accessed by the UE, when the APP needs to obtain user information of UE, the MEC may obtain the user information of the UE from the eNodeB based on a request of the APP.

In actual use, a plurality of UEs are usually attached to a same eNodeB. Therefore, each eNodeB stores contexts of a plurality of UEs. Because user information of each UE is stored on the eNodeB in a form of a context, the eNodeB usually identifies and distinguishes between contexts of different UEs by using context identifiers (context ID). When the MEC needs to obtain user information of UE from the eNodeB, the MEC needs to provide a context identifier of the UE for the eNodeB, and the eNodeB determines, by using the context identifier provided by the MEC, a context from which the user information is to be obtained.

However, because the MEC is deployed on the S1-U interface, the APP deployed inside or outside the MEC can identify and distinguish between UEs only by using external identifiers (External ID) of the UEs. When the APP needs to obtain user information of UE by using the MEC, the APP can provide only an external identifier of the UE for the MEC. Because the external identifier provided by the APP and the context identifiers used by the eNodeB to identify and distinguish between the contexts of the different UEs are different types of information, when identification information provided by the APP is the external identifier of the UE, the MEC and the eNodeB cannot determine, based on the external identifier provided by the APP, the UE whose user information is requested by the APP, and consequently the MEC cannot obtain the user information from the eNodeB based on the request of the APP.

### SUMMARY

This application provides a user information obtaining method and apparatus, an identifier correspondence storage method and apparatus, and a device, to alleviate a problem that MEC cannot obtain user information from an eNodeB based on a request of an APP.

According to a first aspect, this application provides a user information obtaining method, and the method includes: receiving, by a Mobile Edge Computing MEC platform, a first user information obtaining request, where the first user information obtaining request carries external identifier information of user equipment UE; determining, by the MEC based on a prestored identifier correspondence, a context identifier corresponding to the external identifier information, where the identifier correspondence is a correspondence between the external identifier information of the UE and the context identifier of the UE; sending, by the MEC, a second user information obtaining request to an evolved NodeB eNodeB, where the second user information obtaining request carries the context identifier; and receiving, by the MEC, user information sent by the eNodeB in response to the second user information obtaining request, where the user information is obtained by the eNodeB from a context indicated by the context identifier.

In this implementation, the MEC may determine, based on the prestored identifier correspondence, the context identifier corresponding to an external identifier. Therefore, after receiving a user information obtaining request of an APP, the MEC can determine a context from which user information is to be obtained, so that the MEC can obtain, from the eNodeB based on the request of the APP, the user information requested by the APP

With reference to the first aspect, in a first possible implementation of the first aspect, before the receiving, by MEC, a first user information obtaining request, the method further includes: receiving, by the MEC, the identifier correspondence sent by the eNodeB, where the identifier correspondence is generated by a mobility management entity MME after the MME obtains the external identifier information of the UE and the context identifier of the UE and is sent by the MME to the eNodeB; and storing, by the MEC, the identifier correspondence.

In this implementation, the MEC may prestore the correspondence, so that the MEC can obtain the user information more quickly.

With reference to the first aspect or the first possible implementation of the first aspect, in a second possible implementation of the first aspect, the external identifier information includes an external identifier of the UE or a hash value of the external identifier.

According to a second aspect, this application further provides another user information obtaining method, and the method includes: receiving, by an evolved NodeB eNodeB, a second user information obtaining request sent by a Mobile Edge Computing MEC platform, where the second user information obtaining request includes external identifier information of user equipment UE; and
determining, by the eNodeB based on a prestored identifier correspondence, a context identifier corresponding to the external identifier information, where the identifier correspondence is a correspondence between the external identifier information of the UE and the context identifier of the UE; obtaining, by the eNodeB from a context indicated by the context identifier, user information requested by using the second user information obtaining request; and sending, by the eNodeB, the user information to the MEC.

With reference to the second aspect, in a first possible implementation of the second aspect, before the receiving, by an eNodeB, a second user information obtaining request sent by a Mobile Edge Computing MEC platform, the method further includes: receiving, by the eNodeB, the identifier correspondence, where the identifier correspondence is generated by a mobility management entity MME after the MME obtains the external identifier information of the UE and the context identifier of the UE and is sent by the MME; and storing, by the eNodeB, the identifier correspondence.

With reference to the second aspect or the first possible implementation of the second aspect, in a second possible implementation of the second aspect, the external identifier information includes an external identifier of the UE or a hash value of the external identifier.

According to a third aspect, this application provides an identifier correspondence storage method, and the method includes: obtaining, by a mobility management entity MME, external identifier information of user equipment UE from a home subscriber server HSS; obtaining, by the MME, a context identifier of the UE; generating, by the MME, an identifier correspondence, where the identifier correspondence is a correspondence between the external identifier information of the UE and the context identifier of the UE; and sending, by the MME, the identifier correspondence to the eNodeB, where the eNodeB is configured to store the identifier correspondence, or is configured to store the identifier correspondence onto a Mobile Edge Computing MEC platform.

With reference to the third aspect, in a first possible implementation of the third aspect, the obtaining, by an MME, external identifier information of user equipment UE from a home subscriber server HSS includes: sending, by the MME, an international mobile subscriber identity IMSI to the HSS; and receiving, by the MME, the external identifier information of the UE that is sent by the HSS and that is corresponding to the IMSI.

With reference to the third aspect or the first possible implementation of the third aspect, in a second possible implementation of the third aspect, the obtaining, by the MME, a context identifier of the UE includes: sending, by the MME, the IMSI to the HSS; and receiving, by the MME, the context identifier of the UE that is sent by the eNodeB and that is corresponding to the IMSI.

With reference to the third aspect or the first possible implementation of the third aspect, in a third possible implementation of the third aspect, the obtaining, by the MME, a context identifier of the UE includes: allocating, by the MME, the context identifier to the UE.

With reference to the third aspect or the first to the third possible implementations of the third aspect, in a fourth possible implementation of the third aspect, the generating, by the MME, an identifier correspondence includes: when the external identifier information is an external identifier of the UE, calculating, by the MME, a hash value of the external identifier by using a hash operation; and generating, by the MME, the identifier correspondence between the hash value of the external identifier and the context identifier.

According to a fourth aspect, this application further provides a user information obtaining apparatus, and the apparatus includes: a receiving unit, configured to receive a first user information obtaining request, where the first user information obtaining request carries external identifier information of user equipment UE; a determining unit, configured to determine, based on a prestored identifier correspondence, a context identifier corresponding to the external identifier information, where the identifier correspondence is a correspondence between the external identifier information of the UE and the context identifier of the UE; and a sending unit, configured to send a second user information obtaining request to an evolved NodeB eNodeB, where the second user information obtaining request carries the context identifier, where the receiving unit is further configured to receive user information sent by the eNodeB in response to the second user information obtaining request, where the user information is obtained by the eNodeB from a context indicated by the context identifier.

With reference to the fourth aspect, in a first possible implementation of the fourth aspect, the apparatus may further include a storage unit; the receiving unit is further configured to receive the identifier correspondence sent by the eNodeB, where the identifier correspondence is generated by a mobility management entity MME after the MME obtains the external identifier information of the UE and the context identifier of the UE and is sent by the MME to the eNodeB; and the storage unit is configured to store the identifier correspondence.

According to a fifth aspect, this application further provides a user information obtaining apparatus, and the apparatus includes: a receiving unit, configured to receive a second user information obtaining request sent by a Mobile Edge Computing MEC platform, where the second user information obtaining request includes external identifier information of user equipment UE; a processing unit, configured to: determine, based on a prestored identifier correspondence, a context identifier corresponding to the external identifier information, where the identifier correspondence is a correspondence between the external identifier information of the UE and the context identifier of the UE; and obtain, from a context indicated by the context identifier, user information requested by using the second user information obtaining request; and a sending unit, configured to send the user information to the MEC.

With reference to the fifth aspect, in a first possible implementation of the fifth aspect, the apparatus may further include a storage unit; the receiving unit is further configured to receive the identifier correspondence, where the identifier correspondence is generated by a mobility management entity MME after the MME obtains the external identifier information of the UE and the context identifier of the UE and is sent by the MME; and the storage unit is configured to store the identifier correspondence.

According to a sixth aspect, this application further provides an identifier correspondence storage apparatus, and the apparatus may include: an obtaining unit, configured to: obtain external identifier information of user equipment UE from a home subscriber server HSS, and obtain a context identifier of the UE from an eNodeB; a processing unit, configured to generate an identifier correspondence, where the identifier correspondence is a correspondence between the external identifier information of the UE and the context identifier of the UE; and a sending unit, configured to send the identifier correspondence to the eNodeB, where the eNodeB is configured to store the identifier correspondence, or is configured to store the identifier correspondence onto a Mobile Edge Computing MEC platform.

With reference to the sixth aspect, in a first possible implementation of the sixth aspect, the processing unit is specifically configured to: when the external identifier information is an external identifier of the UE, calculate a hash value of the external identifier by using a hash operation; and generate the identifier correspondence between the hash value of the external identifier and the context identifier.

According to a seventh aspect, this application further provides a Mobile Edge Computing platform, including a processor, a memory, and a communications interface, where the processor may be configured to execute a program or an instruction that is stored in the memory, to: receive a first user information obtaining request by using the communications interface, where the first user information obtaining request carries external identifier information of user equipment UE; determine, based on a prestored identifier correspondence, a context identifier corresponding to the external identifier information, where the identifier correspondence is a correspondence between the external identifier information of the UE and the context identifier of the UE; send a second user information obtaining request to an evolved NodeB eNodeB by using the communications interface, where the second user information obtaining request carries the context identifier; and receive, by using the communications interface, user information sent by the eNodeB in response to the second user information obtaining request, where the user information is obtained by the eNodeB from a context indicated by the context identifier.

With reference to the seventh aspect, in a first possible implementation of the seventh aspect, the processor may be further configured to: receive, by using the communications interface, the identifier correspondence sent by the eNodeB, where the identifier correspondence is generated by a mobility management entity MME after the MME obtains the external identifier information of the UE and the context identifier of the UE and is sent by the MME to the eNodeB; and store the identifier correspondence in the memory.

According to an eighth aspect, this application further provides an evolved NodeB, including a processor, a memory, and a communications interface, where the processor may execute a program or an instruction that is stored in the memory, to: receive, by using the communications interface, a second user information obtaining request sent by a Mobile Edge Computing MEC platform, where the second user information obtaining request includes external identifier information of user equipment UE; determine, based on a prestored identifier correspondence, a context identifier corresponding to the external identifier information, where the identifier correspondence is a correspondence between the external identifier information of the UE and the context identifier of the UE; obtain, from a context indicated by the context identifier, user information requested by using the second user information obtaining request; and send the user information to the MEC by using the communications interface.

With reference to the eighth aspect, in a first possible implementation of the eighth aspect, the processor may be further configured to: receive the identifier correspondence by using the communications interface, where the identifier correspondence is generated by a mobility management entity MME after the MME obtains the external identifier information of the UE and the context identifier of the UE and is sent by the MME; and store the identifier correspondence in the memory.

According to a ninth aspect, this application further provides a mobility management entity, including a processor, a memory, and a communications interface, where the processor may execute a program or an instruction that is stored in the memory, to: obtain external identifier information of user equipment UE from a home subscriber server HSS by using the communications interface, and obtain a context identifier of the UE from an eNodeB by using the communications interface; generate an identifier correspondence, where the identifier correspondence is a correspondence between the external identifier information of the UE and the context identifier of the UE; and send the identifier correspondence to the eNodeB by using the communications interface, where the eNodeB is configured to store the identifier correspondence, or is configured to store the identifier correspondence onto a Mobile Edge Computing MEC platform.

With reference to the ninth aspect, in a first possible implementation of the ninth aspect, the processor may be further configured to: send an international mobile subscriber identity IMSI to the HSS by using the communications interface; and receive, by using the communications interface, the external identifier information of the UE that is sent by the HSS and that is corresponding to the IMSI.

With reference to the ninth aspect or the first possible implementation of the ninth aspect, in a second possible implementation of the ninth aspect, the processor may be further configured to: send the IMSI to the eNodeB by using the communications interface; and receive, by using the communications interface, the context identifier of the UE that is sent by the eNodeB and that is corresponding to the IMSI.

According to a tenth aspect, this application further provides a wireless communications system, and the wireless communications system may include one of the Mobile Edge Computing platform provided in the various implementations of the seventh aspect, the evolved NodeB provided in the various implementations of the eighth aspect, or the mobility management entity provided in the various implementations of the ninth aspect.

According to the method, apparatus, and device that are provided in this application, the MEC may determine, based on the prestored identifier correspondence, the context identifier corresponding to the external identifier. Therefore, after receiving a user information obtaining request of an APP, the MEC can determine a context from which user information is to be obtained, so that the MEC can obtain, from the eNodeB based on the request of the APP, the user information requested by the APP.

### BRIEF DESCRIPTION OF DRAWINGS

To describe the technical solutions in this application more clearly, the following briefly describes the accompanying drawings required for describing the embodiments. Apparently, a person of ordinary skill in the art may derive other drawings from these accompanying drawings without creative efforts.
FIG. 1 is a schematic structural diagram of a wireless communications system according to this application;
FIG. 2 is another schematic structural diagram of a wireless communications system according to this application;
FIG. 3 is a schematic flowchart of an embodiment of a user information obtaining method according to this application;
FIG. 4 is a schematic flowchart of an embodiment of an identifier correspondence storage method according to this application;
FIG. 5 is a schematic structural diagram of an embodiment of a user information obtaining apparatus according to this application;
FIG. 6 is a schematic structural diagram of another embodiment of a user information obtaining apparatus according to this application;
FIG. 7 is a schematic structural diagram of an embodiment of an identifier correspondence storage apparatus according to this application; and
FIG. 8 is a schematic structural diagram of an embodiment of a network element according to this application.

### DESCRIPTION OF EMBODIMENTS

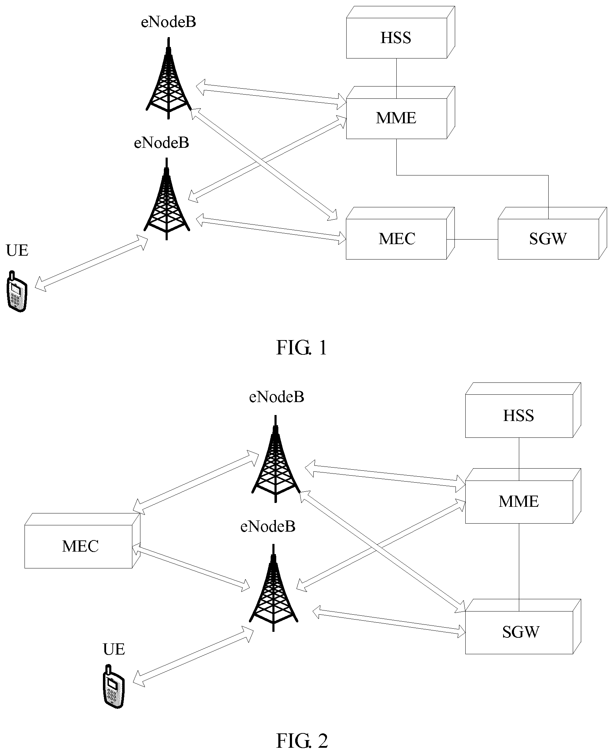

FIG. 1 is a schematic structural diagram of a wireless communications system according to this application.

As shown in FIG. 1, the wireless communications system may include an evolved UMTS terrestrial radio access network (evolved UMTS terrestrial radio access network, E-UTRAN for short) and network elements such as MEC, a home subscriber server (home subscriber server, HSS for short), a mobility management entity (mobility management entity, MME for short), and a serving gateway (serving gateway, SGW for short). Each network element in the wireless communications system may be an entity device or a virtual device.

The E-UTRAN may be a network including a plurality of eNodeBs, and is used to implement functions such as a wireless physical layer function, resource scheduling and radio resource management, radio access control, and mobility management. UE may be connected to the E-UTRAN by using a universal user-to-network interface (Universal User-to-Network interface, uu for short), to access the wireless communications system.

The eNodeB in the E-UTRAN is connected to the SGW by using a user equipment plane interface (S1-U), to transmit user equipment data; and is connected to the MME by using a control plane interface (SI-MME), to implement a function such as radio access bearer control by using an S1-AP protocol.

The MME is mainly responsible for all control plane functions of the user equipment, to be specific, session management, including non-access stratum (non-access stratum, NAS for short) signaling and security, tracking area list (tracking area list) management, selection of a public data network gateway (public data network gateway, PGW for short) and an SGW, and the like. The PGW is an ingress of data sent by an external network to the UE, and is configured to implement UE IP address assignment, UE data packet filtering, rate control, charging information generation, and the like. The SGW is mainly responsible for data transmission, data forwarding, route switching, and the like for the UE, and serves as a local mobility anchor when the UE is handed over between eNodeBs.

When the UE is connected to the network, the eNodeB and the MME store context identifiers such as S1-AP IDs of the UE. The S1-AP IDs are unique identifiers for respectively identifying the UE on an MME side and an eNodeB side of an SI link during one time of SI link establishment. Although the eNodeB does not store an IMSI of the UE, the eNodeB may store an eNB UE S1-AP ID corresponding to an MME UE S1-AP ID for uniquely identifying the UE on the MME.

The HSS is connected to the MME by using an S6a interface, and is configured to: store UE subscription information, and implement UE subscription data management, UE location information management, mobility management, access restriction, and the like.

The MEC is deployed at different locations based on different functions that need to be implemented by the MEC. The MEC may be deployed between the eNodeB and the SGW device. In this case, a deployment manner of the MEC may be shown in FIG. 1. Alternatively, the MEC may be connected only to the eNodeB, but is not connected to the SGW. In this case, a deployment manner of the MEC may be shown in FIG. 2.

In this embodiment of this application, an identifier correspondence of each UE may be prestored on the MEC or on the eNodeB. The identifier correspondence of the UE is a correspondence between external identifier information of the UE and a context identifier of the UE. After the identifier correspondence of the UE is stored, the MEC or the eNodeB may determine, based on the identifier correspondence, the context identifier corresponding to the external identifier information of the UE, so that the MEC or the eNodeB can determine a context of the UE based on an external identifier of the UE. The external identifier is an identifier of the UE. The external identifier is managed by a mobile network operator, is globally unique, and can be in a one-to-one mapping to an international mobile subscriber identity (international mobile subscriber identity, IMSI for short) of the UE, so that an APP deployed inside the MEC or deployed outside the MEC may distinguish between different UEs by using external identifiers. In actual use, same UE may have a plurality of external identifiers at the same time. The external identifier may be a phone number of the UE, or may be a third-party identifier. For example, the APP may distinguish between different UEs by using different phone numbers, or may distinguish between different UEs by using different WeChat IDs, email addresses, or the like.

In the embodiments of the present invention, the APP may be deployed inside or outside the MEC. When the APP is deployed outside the MEC, the APP is usually deployed on another network element that can communicate with the MEC.

The following describes a user information obtaining method in this application with reference to the accompanying drawings.

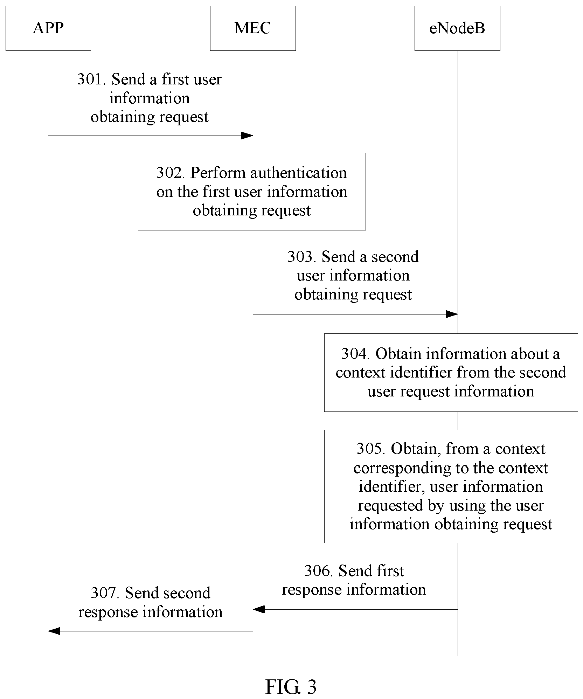

FIG. 3 is a schematic flowchart of an embodiment of a user information obtaining method according to this application.

Step 301: An APP sends a first user information obtaining request to MEC, where the first user information obtaining request is used to request user information of UE.

When the APP needs to obtain the user information of the UE, the APP may generate the first user information obtaining request and send the first user information obtaining request to the MEC. The first user information obtaining request may carry external identifier information of the UE. When the APP needs to obtain user information of a plurality of UEs at the same time, the first user information obtaining request may carry external identifiers of the plurality of UEs.

The user information of the UE may include a plurality of types such as a user connection status, user reachability, and a user location of the UE. The APP may need to obtain only one or several types of the foregoing user information, without a need to obtain all other user information. Therefore, in addition to the external identifier information, the first user obtaining request may further carry parameter information. A type of the user information that the UE wants to obtain may be indicated by using the parameter information, to avoid unnecessary network resource overheads caused by obtaining all types of user information each time.

The parameter information may include different specific parameters based on different types of the user information that the UE wants to obtain.

For example, when the first user obtaining request is specifically used to obtain the user connection status of the UE, the parameter information may include a monitoring type (monitoring type), a maximum number of reports (maximum number of reports), monitoring duration (monitoring duration), maximum detection time (maximum detection time), and the like. The monitoring type is set to loss of connectivity (loss of connectivity). The maximum detection time is a parameter in this event, and indicates that any communication time of the UE does not exceed this value. In this case, the UE is determined as loss of connectivity.

For another example, when the first user obtaining request is specifically used to obtain the user reachability, the parameter information may include a monitoring type, a maximum number of reports, monitoring duration, a maximum latency (maximum latency), a reachability type (reachability type), and the like. The monitoring type is set to UE reachability (UE reachability). The maximum latency is a parameter in this event, and specifies a maximum latency after which the UE can receive a mobile phone short message service (Short Message Service, SMS for short) or downlink data. The reachability type is a parameter in this event, and identifies that the first user obtaining request is SMS reachability or data reachability.

For still another example, when the first user obtaining request is specifically used to obtain the user location, the parameter information may include a monitoring type, a maximum number of reports, monitoring duration, and a location type (location type). The monitoring type is set to location reporting (location reporting). The location type is a parameter in this event, and indicates whether a current location of the UE or a location at which the UE is finally found is requested.

When the first user obtaining request is specifically used to obtain a plurality of types of user information at the same time, the parameter information may carry, at the same time, specific parameters used to obtain the plurality of types of user information.

For example, when the first user obtaining request is used to obtain the user connection status, the user reachability, and the user location at the same time, the parameter information may include a plurality of specific parameters such as a monitoring type, a maximum number of reports, monitoring duration, maximum detection time, a maximum latency, a reachability type, and a location type.

Step 302: The MEC performs authentication on the first user information obtaining request.

After receiving the first user information obtaining request, the MEC may first perform authentication on the first user information obtaining request, to determine whether the APP has permission to obtain the user information requested by using the first user information obtaining request. Whether the APP has permission to obtain the user information requested by using the first user information obtaining request may include: whether the APP has permission to obtain the user information of the UE, whether the APP has permission to obtain a specific type of user information, and the like.

Step 303: After the authentication on the first user information obtaining request succeeds, the MEC sends a second user information obtaining request to an eNodeB.

The MEC may generate the second user information obtaining request after the MEC receives the first user information obtaining request or after the authentication on the first user information obtaining request succeeds, and send the second user information obtaining request to the eNodeB after the authentication on the first user information obtaining request succeeds.

Based on different storage locations of the identifier correspondence, the second user information obtaining request may be generated in different manners, and the second user information obtaining request may carry different information.

Optionally, when the identifier correspondence is stored on the eNodeB or a network element that can communicate with the eNodeB, the second user information obtaining request may carry the parameter information and the external identifier information.

When external identifier information in the identifier correspondence is a hash value of an external identifier, but the external identifier information in the first user information obtaining request is the external identifier, the MEC may first calculate the hash value of the external identifier, and then replace the external identifier in the first user information obtaining request with the hash value of the external identifier, to obtain the second user information obtaining request. When both external identifier information in the identifier correspondence and the external identifier information in the first user information obtaining request are an external identifier or a hash value of the external identifier, the MEC may directly use the first user information obtaining request as the second user information obtaining request.

For example, when the identifier correspondence is stored on the eNodeB, if the external identifier information carried in the first user information is a phone number of the UE, and the external identifier information in the identifier correspondence is also the phone number of the UE, the MEC may directly use the first user information obtaining request as the second user information obtaining request; or if the external identifier information carried in the first user information is a phone number of the UE, but the external identifier information in the identifier correspondence is also a hash value of the phone number of the UE, the MEC may generate the hash value of the phone number, and replace, with the hash value of the phone number, the phone number carried in the first user information, to obtain the second user information obtaining request.

Optionally, when the identifier correspondence is stored on the MEC or in a network element that can communicate with the MEC, the MEC may first obtain the external identifier information and the parameter information that are carried in the first user information obtaining request, and then obtain, based on the identifier correspondence, a context identifier corresponding to the external identifier information; and after obtaining the context identifier, generate the second user information obtaining request that includes the context identifier and the parameter information.

For example, when the identifier correspondence is stored on the MEC, if the external identifier information carried in the first user information is a phone number of the UE, and external identifier information in the identifier correspondence is also the phone number of the UE, the MEC may determine, based on the identifier correspondence, a context identifier corresponding to the phone number, and then generate the second user information obtaining request. The second user information obtaining request may carry the context identifier and the parameter information.

It should be noted herein that after receiving the first user request, the MEC directly sends the second user information obtaining request to the eNodeB, without performing authentication on the first user information obtaining request. For a specific sending process, refer to the foregoing descriptions, and details are not described herein again.

Step 304: After receiving the second user information obtaining request sent by the MEC, the eNodeB determines a context identifier of the UE based on content carried in the second user information obtaining request.

The eNodeB determines the context identifier of the UE in different manners based on different content carried in the second user information.

Optionally, when the second user request carries the context identifier, the eNodeB may directly obtain the context identifier from the second user request information after receiving the second user information obtaining request.

Optionally, when the second user information carries the external identifier information, the eNodeB may first obtain the external identifier information from the second user information, and then determine, based on the identifier correspondence prestored on the eNodeB or the network element that can communicate with the eNodeB, the context identifier corresponding to the external identifier information. When the external identifier information is the external identifier of the UE, but the identifier correspondence is a correspondence between the hash value of the external identifier and the context identifier, the eNodeB may first generate the hash value of the external identifier, and then determine the context identifier based on the hash value of the external identifier.

For example, when the second user information obtaining request carries a phone number of the UE, but the identifier correspondence stored on the eNodeB is a correspondence between a hash value of the phone number and a context identifier, the eNodeB may first obtain the phone number from the second user information obtaining request, and then generate the hash value of the phone number; and determine, based on the identifier correspondence, the context identifier corresponding to the hash value of the phone number. The context identifier corresponding to the hash value of the phone number is the context identifier of the UE.

Step 305: The eNodeB obtains, from a context corresponding to the context identifier, the user information requested by using the second user information request.

After obtaining the context identifier, the eNodeB may obtain, from the context indicated by the context identifier, the user information requested by using the second user information request. If the context identifier is an MME-side context identifier, the eNodeB may first determine an eNodeB-side context identifier corresponding to the MME-side context identifier, and then obtain the user information from a context indicated by the eNodeB-side context identifier. If the context identifier is an eNodeB-side context identifier, the eNodeB may directly obtain the user information from a context indicated by the eNodeB-side context identifier.

Because there are a plurality of types of user information, when the second user information obtaining request carries the parameter information, the eNodeB may determine a type or several types of to-be-obtained user information based on content of the parameter information; or when the second user information obtaining request includes no parameter information, the eNodeB may obtain a default type of user information.

For example, when the second user information obtaining request carries the parameter information, and the parameter information includes several types of specific parameters: a monitoring type, a maximum number of reports, monitoring duration, and a location type, the eNodeB may obtain only a user location of the UE from the context of the UE.

For another example, when the second user information obtaining request includes no parameter information, the eNodeB may obtain all types of user information of the UE from the context according to a default setting.

Step 306: The eNodeB sends first response information to the MEC, where the monitoring response includes the user information.

After obtaining the user information, the eNodeB sends the first response information to the MEC. The first response information may carry the user information requested by using the second user information request.

In addition to the user information, the first response information may further include the context identifier of the context or the external identifier information corresponding to the context identifier, so that when the APP requests user information of a plurality of UEs at the same time, the MEC can identify UE whose user information is returned by the eNodeB.

Step 307: The MEC sends second response information to the APP.

After receiving the first response information, the MEC may send the second response information to the APP. The second response information carries the user information requested by the APP. Content of the first response information may be the same as content of the second response information.

In this embodiment, the MEC or the eNodeB may determine the context identifier of the UE based on the external identifier of the UE that is provided by the APP. Therefore, the MEC can obtain the user information of the UE from the context of the UE, so that the APP can obtain the user information of the UE based on the external identifier of the UE.

When the user information is obtained in the foregoing embodiment, the identifier correspondence needs to be prestored on the MEC, on the eNodeB, or on another network element. The following describes an identifier correspondence storage method with reference to the accompanying drawings. The method described in this embodiment may be performed before the MEC receives the first user information obtaining request of the APP.

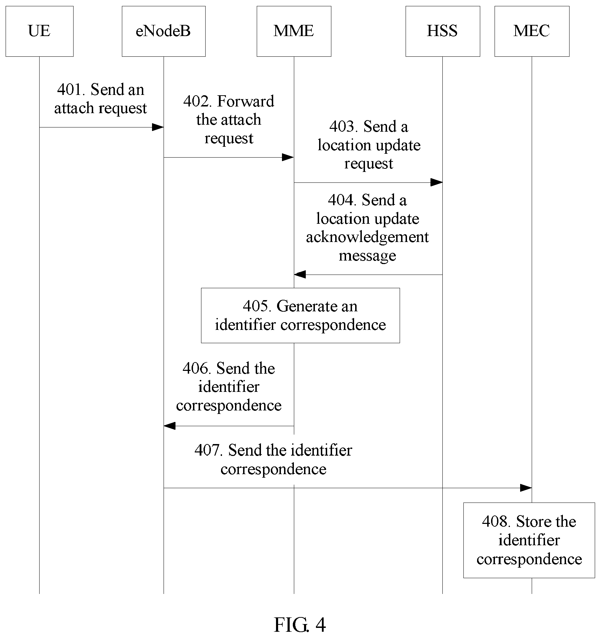

FIG. 4 is a schematic flowchart of an embodiment of an identifier correspondence storage method according to this application.

Step 401: UE sends an attach request to an eNodeB.

When the UE needs to be attached to the eNodeB, the UE may send the attach request to the eNodeB, to request to be attached to the eNodeB. The attach request may carry an international mobile subscriber identity (international mobile subscriber identity, IMSI for short) of the UE.

Step 402: After receiving the attach request sent by the UE, the eNodeB forwards the attach request to an MME.

Step 403: After receiving the attach request information, the MME sends a location update request to an HSS.

After receiving the attach request, the MME generates the location update request, and sends the location update request to the HSS. The location update request may include the IMSI carried in the attach request.

Step 404: After receiving the location update request, the HSS sends a location update acknowledgement message to the MME.

After receiving the location update request, the HSS may first obtain external identifier information that is of the UE and that is corresponding to the IMSI, and then generate the location update acknowledgement message that carries the external identifier information of the UE and the IMSI of the UE; and send the location update acknowledgement information to the MME, so that the MME can obtain the external identifier information of the UE.

Step 405: The MME generates the identifier correspondence.

Because a context of the UE is usually allocated by the MME, when the UE is attached to the eNodeB, the MME allocates an MME-side context identifier to the context of the UE, and the eNodeB allocates an eNodeB-side context identifier to the context of the UE. For same UE, an MME-side context identifier is uniquely corresponding to an eNodeB-side context identifier. Therefore, the eNodeB may determine the eNodeB-side context identifier of the UE based on the MME-side context identifier of the UE, and then determine the context of the UE.

After receiving the location update acknowledgement message, the MME may obtain the external identifier information from the location update acknowledgement message, and obtain the eNodeB-side context identifier of the UE from the eNodeB; and then generate an identifier correspondence between the external identifier information and the eNodeB-side context identifier. Alternatively, the MME may directly generate an identifier correspondence between the external identifier information and the MME-side context identifier.

When obtaining the context identifier of the UE from the eNodeB, the MME may send the IMSI of the UE to the eNodeB. The eNodeB determines the UE based on the IMSI, and then determines the context identifier of the UE; and sends the context identifier to the MME. The MME may send the MME-side context identifier of the UE to the eNodeB. The eNodeB determines the corresponding eNodeB-side context identifier based on the MME-side context identifier, and sends the eNodeB-side context identifier to the MME.

Because the external identifier information obtained from the HSS is usually an external identifier of the UE, when the external identifier information obtained by the MME is the external identifier of the UE, but the identifier correspondence needs to be a correspondence between a hash value of the external identifier and the context identifier, the MME may perform a hash operation on the external identifier after obtaining the external identifier, to obtain the hash value of the external identifier, and then generate the correspondence between the hash value of the external identifier and the context identifier.

A form of the identifier correspondence may be an information group, and the information group may include a plurality of different types of information. In addition to the external identifier information and the context identifier, the information group may further include other identifier information that can be used to indicate the UE or the context of the UE, so that different network elements can distinguish between contexts of UEs by using different types of identifier information. For example, the information group may include the context identifier, a hash value of a phone number, and a hash value of an email address, so that another network element can determine the context identifier by using the hash value of the phone number, and can also determine the context identifier by using the email address.

Step 406: The MME sends the identifier correspondence to the eNodeB.

After determining the identifier correspondence, the MME may send the identifier correspondence to the eNodeB, so that the eNodeB can obtain the identifier correspondence.

Step 407: The eNodeB sends the identifier correspondence to the MEC.

Based on different actual requirements of the wireless communications system, after receiving the identifier correspondence, the eNodeB may store the identifier correspondence on the eNodeB, or may store the identifier correspondence onto the MEC or another network element.

When the identifier correspondence needs to be stored on the eNodeB, the eNodeB may directly store the identifier correspondence after receiving the identifier correspondence. When the identifier correspondence needs to be stored on the another network element, the eNodeB may send the identifier correspondence to the network element after receiving the identifier correspondence.

For example, because the MEC is deployed on an S1-U interface, the MEC cannot directly communicate with the MME. When the identifier correspondence needs to be stored on the MEC, the MME may first send the identifier correspondence to the eNodeB, and then the eNodeB sends the identifier correspondence to the MEC, so that the MEC can receive the identifier correspondence.

Step 408: The MEC stores the identifier correspondence.

When storing the identifier correspondence, the MEC may store the identifier correspondence on the MEC, or may store the correspondence on another network element that can communicate with the MEC. Therefore, when the second user information obtaining request carries the external identifier information of the UE, the MEC can determine the corresponding context identifier based on the external identifier information.

It should be noted herein that if the eNodeB needs to store the identifier correspondence on the eNodeB, after receiving the identifier correspondence, the eNodeB only needs to store the identifier correspondence on the eNodeB, and step 407 and step 408 do not need to be further performed.

In this embodiment, the eNodeB may store the identifier correspondence on the eNodeB, or store the identifier correspondence onto the MEC, to create a condition for the eNodeB or the MEC to determine the context identifier of the UE based on the external identifier of the UE.

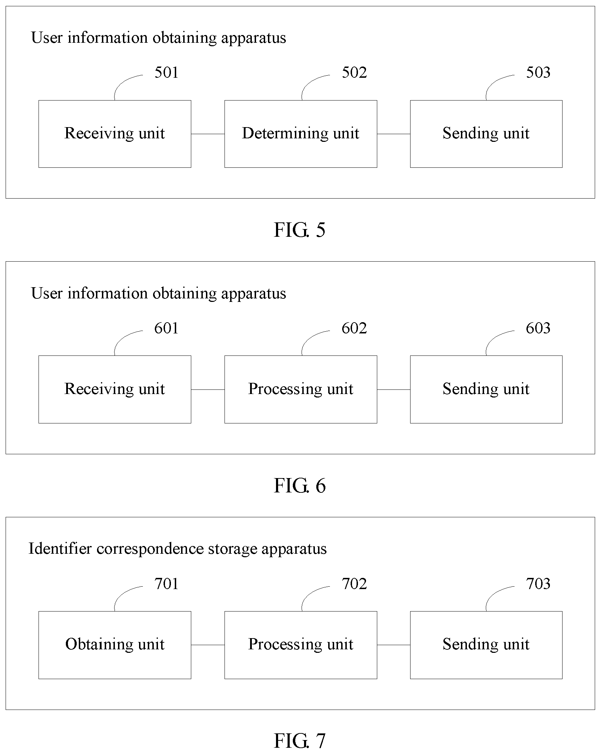

FIG. 5 is a schematic structural diagram of an embodiment of a user information obtaining apparatus according to this application. The user information obtaining apparatus may be disposed on MEC, or may be the MEC.

As shown in FIG. 5, the user information obtaining apparatus may include a receiving unit 501, a determining unit 502, and a sending unit 503.

The receiving unit 501 is configured to receive a first user information obtaining request, where the first user information obtaining request carries external identifier information of user equipment UE. The determining unit 502 is configured to determine, based on a prestored identifier correspondence, a context identifier corresponding to the external identifier information, where the identifier correspondence is a correspondence between the external identifier information of the UE and the context identifier of the UE. The sending unit 503 is configured to send a second user information obtaining request to an evolved NodeB eNodeB, where the second user information obtaining request carries the context identifier. The receiving unit 501 is further configured to receive user information sent by the eNodeB in response to the second user information obtaining request, where the user information is obtained by the eNodeB from a context indicated by the context identifier.

Optionally, the user information obtaining apparatus may further include a storage unit. When the user information obtaining apparatus includes the storage unit, the receiving unit 501 is further configured to receive the identifier correspondence sent by the eNodeB, where the identifier correspondence is generated by a mobility management entity MME after the MME obtains the external identifier information of the UE and the context identifier of the UE and is sent by the MME to the eNodeB. The storage unit is configured to store the identifier correspondence.

FIG. 6 is a schematic structural diagram of another embodiment of a user information obtaining apparatus according to this application. The user information obtaining apparatus may be disposed on an eNodeB, or may be the eNodeB.

As shown in FIG. 6, the user information obtaining apparatus may include a receiving unit 601, a processing unit 602, and a sending unit 603.

The receiving unit 601 is configured to receive a second user information obtaining request sent by a Mobile Edge Computing MEC platform, where the second user information obtaining request includes external identifier information of user equipment UE. The processing unit 602 is configured to determine, based on a prestored identifier correspondence, a context identifier corresponding to the external identifier information, where the identifier correspondence is a correspondence between the external identifier information of the UE and the context identifier of the UE; and is configured to obtain, from a context indicated by the context identifier, user information requested by using the second user information obtaining request. The sending unit 603 is configured to send the user information to the MEC.

Optionally, the user information obtaining apparatus may further include a storage unit. When the user information obtaining apparatus further includes the storage unit, the receiving unit 601 is further configured to receive the identifier correspondence, where the identifier correspondence is generated by a mobility management entity MME after the MME obtains the external identifier information of the UE and the context identifier of the UE and is sent by the MME. The storage unit is configured to store the identifier correspondence.

FIG. 7 is a schematic structural diagram of an embodiment of an identifier correspondence storage apparatus according to this application. The identifier correspondence storage apparatus may be disposed on MEC, or may be the MEC.

As shown in FIG. 7, the identifier correspondence storage apparatus may include an obtaining unit 701, a processing unit 702, and a sending unit 703.

The obtaining unit 701 is configured to: obtain external identifier information of user equipment UE from a home subscriber server HSS, and obtain a context identifier of the UE from an eNodeB. The processing unit 702 is configured to generate an identifier correspondence, where the identifier correspondence is a correspondence between the external identifier information of the UE and the context identifier of the UE. The sending unit 703 is configured to send the identifier correspondence to the eNodeB, where the eNodeB is configured to store the identifier correspondence, or is configured to store the identifier correspondence onto a Mobile Edge Computing MEC platform.

Optionally, the processing unit 702 is specifically configured to: when the external identifier information is an external identifier of the UE, calculate a hash value of the external identifier by using a hash operation; and generate the identifier correspondence between the hash value of the external identifier and the context identifier.

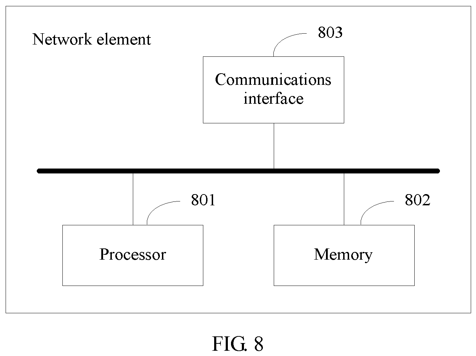

FIG. 8 is a schematic structural diagram of a network element in a wireless communications system according to this application. The network element may be any one of MEC, an eNodeB, or an MME.

As shown in FIG. 8, the network element may include a processor 801, a memory 802, and a communications interface 803. The processor 801, the memory 802, and the communications interface 803 are connected to each other by using a bus. The bus may be a Peripheral Component Interconnect (peripheral component interconnect, PCI for short) bus, an Extended Industry Standard Architecture (extended industry standard architecture, EISA for short) bus, or the like. The bus may be categorized as an address bus, a data bus, a control bus, or the like.

The processor 801 may be a central processing unit (central processing unit, CPU for short), a network processor (network processor, NP for short), or a combination of a CPU and an NP. The processor 801 may further include a hardware chip. The hardware chip may be an application-specific integrated circuit (application-specific integrated circuit, ASIC for short), a programmable logic device (programmable logic device, PLD for short), or a combination thereof. The PLD may be a complex programmable logic device (complex programmable logic device, CPLD for short), a field-programmable gate array (field-programmable gate array, FPGA for short), generic array logic (generic array logic, GAL for short), or any combination thereof. In this application, the processor 801 can implement different functions based on different network element types.

The memory 802 may include a volatile memory (volatile memory), such as a random access memory (random access memory, RAM for short), or may include a nonvolatile memory (nonvolatile memory), such as a flash memory (flash memory), a hard disk (hard disk drive, HDD for short), or a solid-state drive (solid-state drive, SSD for short). The memory 802 may alternatively include a combination of the foregoing types of memories. The memory 802 may store a program or code, and the processor 801 of the network element may implement a function of the network element by executing the program or code.

In the embodiments of this application, in addition to the program or code, different types of network elements may further store different information. For example, the memory 802 of the eNodeB may further store a context of UE, and the memory 802 of the eNodeB or the MEC may further store an identifier correspondence.

The communications interface 803 is configured to communicate with another device. The communications interface 803 may be a wired communications interface, a wireless communications interface 803, or a combination thereof. The wireless communications interface 803 may include a universal user interface, a user equipment plane interface, a control plane interface, and the like.

When the network element is the MEC, the processor 801 may be configured to: receive a first user information obtaining request by using the communications interface 803, where the first user information obtaining request carries external identifier information of user equipment UE; determine, based on a prestored identifier correspondence, a context identifier corresponding to the external identifier information; send a second user information obtaining request to an evolved NodeB eNodeB by using the communications interface 803; and receive, by using the communications interface 803, user information sent by the eNodeB in response to the second user information obtaining request. Optionally, the processor 801 may be further configured to: receive, by using the communications interface 803, the identifier correspondence sent by the eNodeB, and store the identifier correspondence in the memory 802 of the MEC or on another network element.

When the network element is the eNodeB, the processor 801 may be configured to: receive, by using the communications interface 803, a second user information obtaining request sent by a Mobile Edge Computing MEC platform; determine, based on a prestored identifier correspondence, a context identifier corresponding to the external identifier information; obtain, from a context indicated by the context identifier, user information requested by using the second user information obtaining request; and send the user information to the MEC by using the communications interface 803. Optionally, the processor 801 may be further configured to: receive the identifier correspondence by using the communications interface 803, and store the identifier correspondence. When storing the identifier correspondence, the processor 801 may store the identifier correspondence in the memory 802 of the eNodeB, or may send the identifier correspondence to the MEC by using the communications interface 803, so that the MEC stores the identifier correspondence.

When the network element is the MME, the processor 801 may be configured to: obtain external identifier information of user equipment UE from a home subscriber server HSS by using the communications interface 803, and obtain a context identifier of the UE from an eNodeB by using the communications interface 803; generate an identifier correspondence; and send the identifier correspondence to the eNodeB by using the communications interface 803, where the eNodeB is configured to store the identifier correspondence, or is configured to store the identifier correspondence onto a Mobile Edge Computing MEC platform.

A person skilled in the art may clearly understand that, the technologies in the embodiments of this application may be implemented by software in combination with a necessary universal hardware platform. Based on such an understanding, the technical solutions in the embodiments of this application essentially or the part contributing to the prior art may be implemented in a form of a software product. The computer software product may be stored in a storage medium, such as a ROM/RAM, a magnetic disk, or an optical disc, and includes several instructions for instructing a computer device (which may be a personal computer, a server, a network device, or the like) to perform the methods described in the embodiments or some parts of the embodiments of this application.

For same or similar parts in the embodiments in this specification, mutual reference can be made to these embodiments. Especially, an apparatus embodiment and a device embodiment are basically similar to corresponding method embodiments, and therefore are described briefly. For related parts, refer to descriptions in the corresponding method embodiments.

The foregoing implementations of this application constitute no limitation on the protection scope of this application.

## Claims

1. A user information obtaining method, comprising:
receiving, by a Mobile Edge Computing MEC platform, a first user information obtaining request, wherein the first user information obtaining request carries external identifier information of user equipment UE;
determining, by the MEC based on a prestored identifier correspondence, a context identifier corresponding to the external identifier information, wherein the identifier correspondence is a correspondence between the external identifier information of the UE and the context identifier of the UE;
sending, by the MEC, a second user information obtaining request to an evolved NodeB eNodeB, wherein the second user information obtaining request carries the context identifier; and
receiving, by the MEC, user information sent by the eNodeB in response to the second user information obtaining request, wherein the user information is obtained by the eNodeB from a context indicated by the context identifier.

2. The method according to claim 1, before the receiving, by MEC, a first user information obtaining request, further comprising:
receiving, by the MEC, the identifier correspondence sent by the eNodeB, wherein the identifier correspondence is generated by a mobility management entity MME after the MME obtains the external identifier information of the UE and the context identifier of the UE and is sent by the MME to the eNodeB; and
storing, by the MEC, the identifier correspondence.

3. The method according to claim 1 or 2, wherein the external identifier information comprises an external identifier of the UE or a hash value of the external identifier.

4. A user information obtaining method, comprising:
receiving, by an evolved NodeB eNodeB, a second user information obtaining request sent by a Mobile Edge Computing MEC platform, wherein the second user information obtaining request comprises external identifier information of user equipment UE;
determining, by the eNodeB based on a prestored identifier correspondence, a context identifier corresponding to the external identifier information, wherein the identifier correspondence is a correspondence between the external identifier information of the UE and the context identifier of the UE;
obtaining, by the eNodeB from a context indicated by the context identifier, user information requested by using the second user information obtaining request; and
sending, by the eNodeB, the user information to the MEC.

5. The method according to claim 4, before the receiving, by an eNodeB, a second user information obtaining request sent by a Mobile Edge Computing MEC platform, further comprising:
receiving, by the eNodeB, the identifier correspondence, wherein the identifier correspondence is generated by a mobility management entity MME after the MME obtains the external identifier information of the UE and the context identifier of the UE and is sent by the MME; and
storing, by the eNodeB, the identifier correspondence.

6. The method according to claim 4 or 5, wherein the external identifier information comprises an external identifier of the UE or a hash value of the external identifier.

7. An identifier correspondence storage method, comprising:
obtaining, by a mobility management entity MME, external identifier information of user equipment UE from a home subscriber server HSS;
obtaining, by the MME, a context identifier of the UE;
generating, by the MME, an identifier correspondence, wherein the identifier correspondence is a correspondence between the external identifier information of the UE and the context identifier of the UE; and
sending, by the MME, the identifier correspondence to the eNodeB, wherein the eNodeB is configured to store the identifier correspondence, or is configured to store the identifier correspondence onto a Mobile Edge Computing MEC platform.

8. The method according to claim 7, wherein the obtaining, by an MME, external identifier information of user equipment UE from a home subscriber server HSS comprises:
sending, by the MME, an international mobile subscriber identity IMSI to the HSS; and
receiving, by the MME, the external identifier information of the UE that is sent by the HSS and that is corresponding to the IMSI.

9. The method according to claim 7 or 8, wherein the obtaining, by the MME, a context identifier of the UE comprises:
sending, by the MME, the IMSI to the eNodeB; and
receiving, by the MME, the context identifier of the UE that is sent by the eNodeB and that is corresponding to the IMSI.

10. The method according to claim 7 or 8, wherein the obtaining, by the MME, a context identifier of the UE comprises:
allocating, by the MME, the context identifier to the UE.

11. The method according to claims 7 to 10, wherein the generating, by the MME, an identifier correspondence comprises:
when the external identifier information is an external identifier of the UE, calculating, by the MME, a hash value of the external identifier by using a hash operation; and
generating, by the MME, the identifier correspondence between the hash value of the external identifier and the context identifier.

12. A user information obtaining apparatus, comprising:
a receiving unit, configured to receive a first user information obtaining request, wherein the first user information obtaining request carries external identifier information of user equipment UE;
a determining unit, configured to determine, based on a prestored identifier correspondence, a context identifier corresponding to the external identifier information, wherein the identifier correspondence is a correspondence between the external identifier information of the UE and the context identifier of the UE; and
a sending unit, configured to send a second user information obtaining request to an evolved NodeB eNodeB, wherein the second user information obtaining request carries the context identifier, wherein
the receiving unit is further configured to receive user information sent by the eNodeB in response to the second user information obtaining request, wherein the user information is obtained by the eNodeB from a context indicated by the context identifier.

13. The apparatus according to claim 12, wherein the apparatus further comprises a storage unit;
the receiving unit is further configured to receive the identifier correspondence sent by the eNodeB, wherein the identifier correspondence is generated by a mobility management entity MME after the MME obtains the external identifier information of the UE and the context identifier of the UE and is sent by the MME to the eNodeB; and
the storage unit is configured to store the identifier correspondence.

14. A user information obtaining apparatus, comprising:
a receiving unit, configured to receive a second user information obtaining request sent by a Mobile Edge Computing MEC platform, wherein the second user information obtaining request comprises external identifier information of user equipment UE;
a processing unit, configured to: determine, based on a prestored identifier correspondence, a context identifier corresponding to the external identifier information, wherein the identifier correspondence is a correspondence between the external identifier information of the UE and the context identifier of the UE; and obtain, from a context indicated by the context identifier, user information requested by using the second user information obtaining request; and
a sending unit, configured to send the user information to the MEC.

15. The apparatus according to claim 14, wherein the apparatus further comprises a storage unit;
the receiving unit is further configured to receive the identifier correspondence, wherein the identifier correspondence is generated by a mobility management entity MME after the MME obtains the external identifier information of the UE and the context identifier of the UE and is sent by the MME; and
the storage unit is configured to store the identifier correspondence.

16. An identifier correspondence storage apparatus, comprising:
an obtaining unit, configured to: obtain external identifier information of user equipment UE from a home subscriber server HSS, and obtain a context identifier of the UE from an eNodeB;
a processing unit, configured to generate an identifier correspondence, wherein the identifier correspondence is a correspondence between the external identifier information of the UE and the context identifier of the UE; and
a sending unit, configured to send the identifier correspondence to the eNodeB, wherein the eNodeB is configured to store the identifier correspondence, or is configured to store the identifier correspondence onto a Mobile Edge Computing MEC platform.

17. The apparatus according to claim 16, wherein
the processing unit is specifically configured to: when the external identifier information is an external identifier of the UE, calculate a hash value of the external identifier by using a hash operation; and generate the identifier correspondence between the hash value of the external identifier and the context identifier.

18. A Mobile Edge Computing platform, comprising a processor and a communications interface, wherein
the processor is configured to: receive a first user information obtaining request by using the communications interface, wherein the first user information obtaining request carries external identifier information of user equipment UE; determine, based on a prestored identifier correspondence, a context identifier corresponding to the external identifier information, wherein the identifier correspondence is a correspondence between the external identifier information of the UE and the context identifier of the UE; send a second user information obtaining request to an evolved NodeB eNodeB by using the communications interface, wherein the second user information obtaining request carries the context identifier; and receive, by using the communications interface, user information sent by the eNodeB in response to the second user information obtaining request, wherein the user information is obtained by the eNodeB from a context indicated by the context identifier.

19. An evolved NodeB, comprising a processor and a communications interface, wherein
the processor is configured to: receive, by using the communications interface, a second user information obtaining request sent by a Mobile Edge Computing MEC platform, wherein the second user information obtaining request comprises external identifier information of user equipment UE; determine, based on a prestored identifier correspondence, a context identifier corresponding to the external identifier information, wherein the identifier correspondence is a correspondence between the external identifier information of the UE and the context identifier of the UE; obtain, from a context indicated by the context identifier, user information requested by using the second user information obtaining request; and send the user information to the MEC by using the communications interface.

20. A mobility management entity, comprising a processor and a communications interface, wherein
the processor is configured to: obtain external identifier information of user equipment UE from a home subscriber server HSS by using the communications interface, and obtain a context identifier of the UE from an eNodeB by using the communications interface; generate an identifier correspondence, wherein the identifier correspondence is a correspondence between the external identifier information of the UE and the context identifier of the UE; and send the identifier correspondence to the eNodeB by using the communications interface, wherein the eNodeB is configured to store the identifier correspondence, or is configured to store the identifier correspondence onto a Mobile Edge Computing MEC platform.
